# FASCICULE DE BREVET EUROPEEN

(11) **EP 3 083 376 B1**
(45) Date de publication et mention de la délivrance du brevet: **11.04.2018**
(21) Numéro de dépôt: 14806637.6
(22) Date de dépôt: 04.12.2014
(51) Int. Cl.: B62D 25/14, B62D 27/02, B62D 29/00

(54) **TRAVERSE DE PLANCHE DE BORD AVEC SUPPORTS LATÉRAUX COMPACTS COLLÉS**
ARMATURENBRETT-QUERTRÄGER MIT EINEM GEBONDETEN KOMPAKTEN LÄNGSTRÄGER
DASHBOARD CROSS-MEMBER COMPRISING BONDED COMPACT SIDE SUPPORTS

(30) Priorité: 18.12.2013 FR 1362939
(43) Date de publication de la demande: 26.10.2016
(73) Titulaire: PSA Automobiles SA, 78300 Poissy (FR); Rehau SA, 57340 Morhange (FR)
(72) Inventeur: APPASAMY, Jean Michel, 78760 Jouars-Pontchartrain (FR); PENNERATH, Eddy, 57450 Henriville (FR)
(74) Mandataire: Fosse, Danièle
(86) Numéro de dépôt international: PCT/EP2014/076506
(87) Numéro de publication internationale: WO 2015/090986

(56) Documents cités:
- DE-U1- 20 308 895
- FR-A1- 2 988 368
- US-A1- 2004 056 463
- US-A1- 2011 156 446

## Description

La présente invention concerne le domaine technique général des pièces de carrosserie de véhicules, notamment de véhicules automobiles, et plus particulièrement celui des traverses de planche de bord.

Il est connu de disposer, transversalement à un véhicule, en vis-à-vis du tablier qui sépare le compartiment moteur de l'habitacle, une traverse qui joint un montant latéral gauche de la carrosserie dudit véhicule à un montant latéral droit de ladite carrosserie, et qui est destinée à former un support pour la colonne de direction ainsi que pour les différents instruments et panneaux d'habillage de la planche de bord.

Usuellement, tel que cela est notamment décrit dans le document US-2010/0176262, les traverses sont réalisées sous forme de structures mécano-soudées, fixées au véhicule par plusieurs organes d'ancrage, parmi lesquels au moins deux supports latéraux venant en prise sur les montants du véhicule, ainsi qu'au moins une jambe de force qui vient en appui sur le plancher.

Dans US 2011/156446, on a proposé une structure de pied avant sur laquelle l'extrémité d'une traverse pour planche de bord est maintenue par un support présentant une platine et un bossage contre lequel repose l'extrémité de la traverse, un demi-collier venant fixer par serrage ladite extrémité sur le support.

Si de telles traverses donnent généralement satisfaction, elles présentent toutefois l'inconvénient d'être relativement lourdes et encombrantes, et souvent complexes et onéreuses à fabriquer.

Les objets assignés à l'invention visent par conséquent à remédier aux inconvénients susmentionnés et à proposer une nouvelle traverse pour planche de bord qui soit simplifiée et allégée, et dont la fabrication soit facile, rapide et peu coûteuse.

Les objets assignés à l'invention sont atteints au moyen d'une traverse pour planche de bord de véhicule, ladite traverse comprenant une barre transversale qui s'étend en longueur selon un axe directeur (YY') depuis un premier support latéral jusqu'à un second support latéral, chacun destiné à la fixation de la traverse sur la carrosserie du véhicule, ladite traverse étant caractérisée en ce qu'au moins le premier support latéral comprend une platine conçue pour venir se fixer sur un montant de la carrosserie du véhicule, ainsi qu'un manchon de support fixé sur ladite platine et dont la paroi latérale interne délimite, autour de l'axe directeur (YY'), un logement tubulaire dans lequel la barre transversale est emboîtée par une première extrémité, ledit manchon de support comportant une chambre de collage qui est marquée en creux depuis la paroi latérale interne dudit manchon de support, en décrochement transverse par rapport à l'axe directeur (YY'), et qui contient un joint de colle qui assure la fixation dudit manchon de support sur ladite barre transversale.

Avantageusement, le second support latéral est similaire au premier support latéral.

Avantageusement, l'agencement propre à l'invention permet de réaliser une jonction robuste et stable par emboîtement et collage entre la barre transversale et le (ou chaque) support latéral, la chambre de collage permettant de doser et de répartir efficacement la colle après emboîtement, sans débordement ni étalement incontrôlé, et ce tout en conservant un (ou des) manchons de support relativement courts, dont la portée de guidage est limitée au strict nécessaire, et qui confèrent donc à la traverse une structure particulièrement légère et compacte.

L'utilisation de supports latéraux à manchons courts, qui n'occupent que les portions terminales de la barre transversale, et qui se trouvent ainsi éloignés des organes portés par la portion intermédiaire de ladite barre transversale, et notamment de l'attache de colonne de direction, permet en effet d'espacer et de séparer axialement les différents organes de la traverse le long de la barre transversale, et ainsi de limiter l'encombrement de l'ensemble, sans pour autant perdre en rigidité.

En outre, l'utilisation d'un ou de deux supports latéraux à manchons de support conformes à l'invention, légers et faciles à manipuler, permet avantageusement un assemblage facile et rapide, à moindre coût.

Enfin, la conception modulaire de la traverse, utilisant des pièces simples, permet de réaliser et d'approvisionner facilement les différentes pièces détachées en temps masqué, facilite les contrôles qualité, et limite le risque de gaspillage lié à une détection tardive de défaut qui entraînerait une mise au rebut de pièces complexes ou de sous-ensembles déjà constitués.

L'invention concerne également un support latéral pour traverse de planche de bord d'un véhicule automobile, caractérisé en ce qu'il comprend une platine conçue pour venir se fixer sur un montant de la carrosserie du véhicule, ainsi qu'un manchon de support fixé sur ladite platine et dont la paroi latérale interne délimite un logement tubulaire destiné à accueillir l'extrémité d'une barre transversale de la traverse, ledit manchon de support comportant une chambre de collage qui est marquée en creux depuis la paroi latérale interne dudit manchon de support, en décrochement transverse par rapport à l'axe du logement tubulaire. La chambre de collage est destinée à contenir un joint de colle qui assure la fixation dudit manchon de support sur ladite barre transversale.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue d'ensemble en perspective, une traverse de planche de bord conforme à l'invention.
La figure 2 illustre, selon une vue de détail en perspective, l'assemblage d'un support latéral conforme à l'invention sur la barre transversale de la traverse de la figure 1.
La figure 3 illustre, selon une vue en coupe longitudinale, le détail de l'assemblage de la figure 2.
La figure 4 illustre, selon une vue en perspective, le support latéral utilisé sur les figures 1 à 3.

L'invention concerne une traverse 1 pour planche de bord de véhicule.

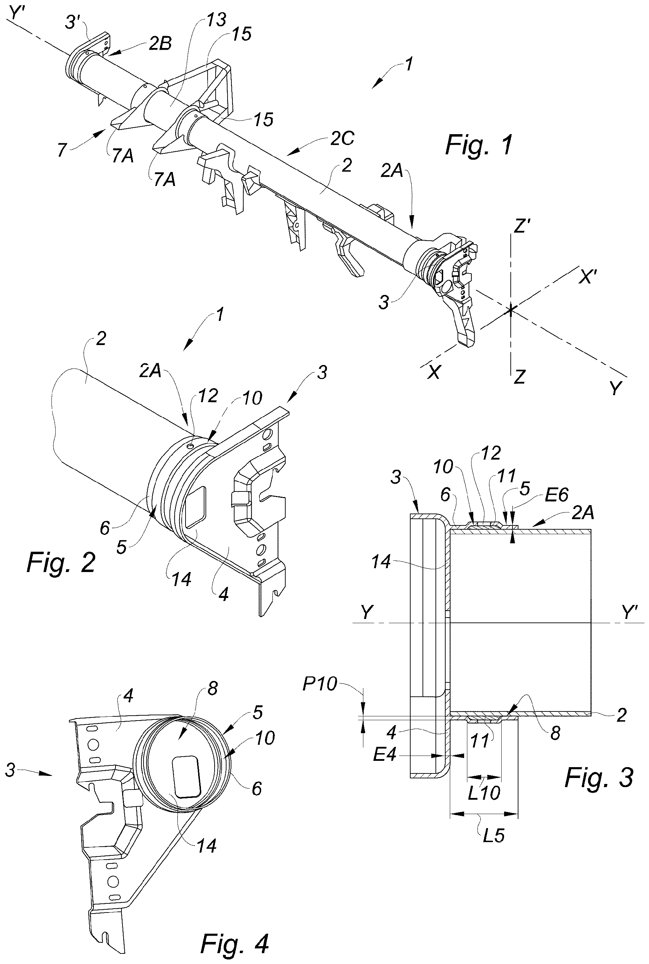

Comme illustré sur la figure 1, la traverse 1 comprend une barre transversale 2 qui s'étend en longueur selon un axe directeur (YY'), de préférence sensiblement rectiligne, depuis un premier support latéral 3 jusqu'à un second support latéral 3', chacun desdits supports latéraux 3, 3' étant destiné à la fixation de la traverse 1 sur la carrosserie du véhicule (non représenté).

L'axe directeur (YY') correspond de préférence à l'axe latéral gauche-droite du véhicule.

On notera par ailleurs (XX') l'axe arrière-avant du véhicule, et (ZZ') l'axe vertical dudit véhicule, lesdits axes formant, avec l'axe directeur (YY') un trièdre direct.

Par simple commodité de description, on se référera de préférence dans ce qui suit au premier support latéral 3, en l'occurrence le support latéral droit sur la figure 1, étant bien entendu que les caractéristiques du second support latéral 3' pourront se déduire *mutatis mutandis* de celles du premier support latéral 3.

En particulier, le premier et le second support latéral 3, 3' pourront être symétriques l'un de l'autre, par rapport au plan médian perpendiculaire à l'axe directeur (YY') et qui coupe la barre transversale 2 en son milieu.

Tel que cela est illustré sur la figure 1, la barre transversale 2 porte, à distance des premier et second supports latéraux 3, 3' le long de l'axe directeur (YY'), au moins une attache de colonne de direction 7, distincte desdits premier et second supports latéraux 3, 3' et agencée pour soutenir la colonne de direction du véhicule (non représentée).

L'attache 7 de colonne de direction peut notamment prendre la forme d'une ou de préférence deux consoles en U venant épouser la paroi latérale de la barre transversale 2 et possédant de préférence des semelles de suspension 7A, préférentiellement planes, conçues pour recevoir un élément de carter de colonne de direction, du genre collier, qui pourra être par exemple fixé par vissage sur lesdites semelles 7A.

Selon l'invention, le premier support latéral 3 (et, le cas échéant, également le second support latéral 3') comprend une platine 4 conçue pour venir se fixer sur un montant de la carrosserie du véhicule, ainsi qu'un manchon de support 5 fixé sur ladite platine 4 et dont la paroi latérale 6 interne délimite, autour de l'axe directeur (YY'), un logement tubulaire 8 dans lequel la barre transversale 2 est emboîtée par une première extrémité 2A.

Le manchon de support 5 présentera avantageusement une forme et des dimensions sensiblement conjuguées à celles de l'extrémité 2A de la barre transversale 2 sur laquelle ledit manchon est fixé.

En particulier, ledit manchon de support 5 pourra prendre la forme d'une bague annulaire, de section circulaire.

Compte-tenu de la nature de l'assemblage du manchon de support 5 sur la barre transversale 2, et par commodité de description, on considérera que le manchon 5 et la barre transversale 2 partagent un même axe directeur (YY').

Par commodité de description, on désignera par « axial » un élément orienté ou considéré selon ledit axe directeur (YY'), et par « radial » un élément orienté ou considéré perpendiculairement audit axe directeur (YY').

A titre indicatif, le diamètre externe de la barre transversale 2 pourra être de l'ordre de 60 mm à 90 mm, et typiquement de 80 mm. Le diamètre interne du manchon 5 pourra être de valeur sensiblement égale.

L'épaisseur E6 de la paroi latérale 6 du manchon 5 pourra quant à elle être comprise entre 2 mm et 3 mm.

Toujours selon l'invention, le manchon de support 5 s'interrompt axialement en retrait de l'attache de colonne de direction 7, et comporte une chambre de collage 10 qui est marquée en creux depuis la paroi latérale 6 interne dudit manchon de support 5, en décrochement (radial) transverse par rapport à l'axe directeur (YY').

Ladite chambre de collage 10, qui s'ouvre ainsi radialement sur le logement tubulaire 8, et donc sur la surface radialement externe de la barre transversale 2 qui occupe ledit logement 8 et vient recouvrir ladite chambre de collage 10, contient avantageusement un joint de colle 11 qui assure la fixation du manchon de support 5 sur ladite barre transversale 2, tel que cela est illustré sur la figure 3.

Avantageusement, la présence de la chambre de collage 10 permet d'emboîter tout d'abord la barre transversale 2 dans le manchon de support 5, avant d'injecter la colle dans la chambre 10 pour former le joint 11, et donc sans risque d'écraser ou de cisailler ledit joint de colle 11 lors de la mise en place des pièces.

En utilisant la chambre de collage 10 comme organe de dosage et de répartition de la colle, on utilise en outre la quantité de colle juste nécessaire et suffisante pour mouiller efficacement le manchon de support 5 et la barre transversale 2, sans aucun gaspillage.

En outre, la mise en oeuvre d'un assemblage par emboîtement collé procure une liaison robuste et stable, le manchon de support 5 offrant un guidage relativement étendu, tant axialement qu'autour de l'axe directeur (YY'), ainsi qu'une superficie de collage importante.

A ce titre, on notera que l'utilisation d'un manchon de support 5 procure un rebord de retenue apte à bloque les déplacements de la barre transversale 2 selon les directions transverses à l'axe directeur (YY'), et notamment tant d'avant en arrière, selon l'axe (XX'), que de haut en bas, selon l'axe (ZZ').

De surcroît, en interrompant le manchon de support 5 en retrait de l'attache de colonne de direction 7, c'est-à-dire en prévoyant que ledit manchon de support 5, et plus particulièrement sa paroi latérale 6, s'achève à une abscisse distante de celle à laquelle commence et se situe ladite attache 7 le long de la barre transversale 2, et donc le long de l'axe directeur (YY'), on évite tout contact direct, et donc toute interférence, entre le manchon de support 5 et l'attache de colonne de direction 7.

Ceci peut notamment contribuer à améliorer le comportement vibratoire de la traverse 1, et notamment sa capacité à limiter la propagation des vibrations.

En outre, en prévoyant que le manchon de support 5 couvre axialement une zone de portée limitée, de telle sorte qu'un intervalle de dégagement sépare axialement l'extrémité dudit manchon de support 5 (opposée à la platine 4) de l'attache de colonne de direction 7 la plus proche, on peut avantageusement laisser, entre ces pièces, une portion de barre transversale 2 à nu, ce qui contribue à réduire le poids et l'encombrement de la traverse 1.

De même, l'étendue axiale limitée du ou des manchon(s) de support 5 du ou des support(s) latéral(latéraux) 3, 3' occupant les portions d'extrémité 2A, 2B permet de dégager au maximum la portion intermédiaire 2C de la barre transversale 2, strictement comprise entre les portions d'extrémité 2A, 2B couvertes par les manchons de support 5, pour y réserver de la place pour différents accessoires ou attaches 7 portés entre les support latéraux 3, 3' et destinés à maintenir des équipements du véhicule et de la planche de bord (colonne de direction, afficheurs, aérothermes, bacs de rangement, etc.)

De préférence, la barre transversale 2 est formée par un tube.

Ceci permet notamment une économie de poids et de matière.

La barre transversale 2, et plus particulièrement le tube, est préférentiellement de section transverse circulaire, ce qui en simplifie la fabrication et l'assemblage.

De préférence, pour alléger encore la structure sans perdre en rigidité, la barre transversale 2, et plus particulièrement le tube formant ladite barre transversale 2, sera formé(e) dans un matériau composite à matrice polymère renforcée de fibres.

On pourra notamment utiliser à cet effet un matériau composite à base de polymère, par exemple de polypropylène (PP), de polyamide (PA) ou de poly-téréphtalate d'éthylène (PET), ou de résine thermodurcissable de type epoxy ou polyester, renforcé par des fibres, de préférences continues, telles que des fibres de verre, de carbone, de Kevlar®, de chanvre, ou bien par un mélange de telles fibres (par exemple 80 % de fibres de verre et 20 % de fibres de carbone).

De préférence, la platine 4, ainsi que, préférentiellement, le manchon de support 5, sont réalisés dans un ou des matériaux métalliques, par exemple en acier, en alliage d'aluminium ou en alliage de magnésium.

De tels matériaux sont en effet faciles à mettre en forme, recyclables, et présentent une bonne ductilité et une bonne résilience, ce qui permet de bénéficier d'une déformation programmée de la platine en cas notamment de freinage brusque ou de collision du véhicule avec un obstacle.

Un tel choix permet donc d'améliorer la sécurité passive de l'habitacle.

En outre, l'utilisation, au niveau du support latéral 3, d'un matériau métallique, plus dense, le cas échéant, que le matériau composite constitutif de la barre transversale 2, améliore le comportement antivibratoire de la traverse 1, et par conséquent le confort des occupants du véhicule.

En outre, le choix d'une platine 4 métallique permettra avantageusement, selon une variante possible de mise en oeuvre, de réaliser la platine 4 par emboutissage.

A titre indicatif, l'épaisseur E4 de la platine 4, et plus particulièrement l'épaisseur de la tôle métallique servant à réaliser ladite platine 4, pourra être sensiblement comprise entre 1,2 mm et 2,5 mm.

De façon particulièrement préférentielle, la platine 4 et le manchon de support 5 seront et assemblés l'un à l'autre par soudage.

On pourra ainsi obtenir rapidement une jonction particulièrement solide entre ces éléments.

La forme de la platine 4 pourra naturellement varier en fonction notamment des besoins de fixation.

Ceci étant, selon une variante d'agencement préférentielle correspondant à celle des figures 1 à 4, la platine 4 pourra présenter, en projection dans un plan normal à l'axe directeur (YY'), une forme sensiblement triangulaire, avec un sommet arrondi à l'intérieur duquel le manchon 5 vient s'inscrire. Ainsi, grâce à cet étalement en « patte d'oie » à partir du manchon 5, la platine 4 offrira une assise large et rigide pour la fixation au montant de carrosserie, tout en restant relativement compacte.

De préférence, la chambre de collage 10, et son ouverture sur le logement tubulaire 8, couvre, autour de l'axe directeur (YY'), un secteur angulaire supérieur à 90 degrés, de préférence supérieur ou égal à 180 degrés, voire supérieur ou égal à 270 degrés, et le cas échéant égal à 360 degrés.

Le joint de colle 11 offrira ainsi une surface de collage étendue, et par conséquent une excellente prise du manchon de support 5 sur la barre transversale 2, notamment à l'encontre du cisaillement en traction axiale ou en torsion, et ce pour un faible encombrement.

Plus particulièrement, la paroi latérale 6 interne du logement tubulaire 8 formant de préférence un contour fermé sur lui-même autour de l'axe directeur (YY'), la chambre de collage 10 pourra former une gorge annulaire, tel que cela est notamment visible sur la figure 4.

En d'autres termes, le joint de colle 11 pourra avantageusement former un cordon ininterrompu qui suit une rainure périphérique (la chambre 10) bouclée sur elle-même, générée de préférence par un cercle de révolution autour de l'axe directeur (YY'), et ainsi former un anneau de collage sur 360 degrés autour de la barre transversale 2, en débord radial de cette dernière.

Avantageusement, un tel agencement annulaire facilitera le dosage de la colle, la quantité utile de colle pouvant par exemple correspondre sensiblement au volume de la chambre de collage 10 à remplir.

Cet agencement annulaire favorisera également la répartition homogène de la colle, en procurant ainsi un ancrage équilibré, robuste et stable, de la barre transversale 2 dans le manchon de support 5.

Enfin, une telle configuration annulaire de la chambre 10 est particulièrement rapide et facile à mettre en forme.

A ce titre, la chambre de collage 10 est de préférence obtenue par expansion plastique locale de la paroi latérale 6 interne du logement tubulaire 8, par exemple par hydroformage ou par roulage.

Ainsi, on pourra avantageusement former la chambre 10 de manière simple et d'un seul tenant avec le manchon de support 5, par déformation radiale centrifuge de la paroi 6 dudit manchon 5, sous forme d'un bossage radialement saillant, tel que cela est notamment visible sur les figures 2, 3 et 4.

A titre indicatif et préférentiel, la profondeur (radiale) P10 de la chambre de collage 10 sera comprise entre 3 mm et 6 mm, et par exemple de l'ordre de 5 mm.

La largeur (axiale, selon l'axe directeur) L10 de la chambre de collage 10 pourra quant à elle être sensiblement comprise entre 5 mm et 15 mm, et par exemple de l'ordre de 10 mm.

Les débords axiaux de la paroi latérale 6 du manchon de support 5, de part et d'autre de la chambre de collage 10, pourront être de l'ordre de 5 mm à 15 mm.

En définitive, la longueur axiale L5 du manchon de support 5, et plus particulièrement la longueur axiale dudit manchon 5 en saillie de la platine 4, correspondant à la longeur sur laquelle le manchon de support 5 et la barre transversale 2 se chevauchent, tel que cela est illustré sur la figure 3, pourra être avantageusement inférieure à 60 mm, de préférence à 50 mm, et plus particulièrement comprise entre 20 mm (typiquement 5 mm de débord axial gauche + 10 mm de chambre + 5 mm de débord axial droit) et 40 mm (typiquement 15 mm de débord axial gauche + 10 mm de chambre + 15 mm de débord axial droit).

En tout état de cause, le manchon de support 5 pourra avantageusement être relativement court axialement, ce qui rend le support latéral 3 particulièrement léger et compact.

De préférence, la platine 4, et plus particulièrement la tôle métallique qui la constitue, forme une paroi de fond 14 du logement tubulaire 8, sensiblement transverse à l'axe directeur (YY') et contre laquelle la barre transversale 2 vient en butée axiale.

A cet effet, le manchon de support 5 pourra avantageusement être formé par une simple bague rapportée (et le cas échéant soudée) à plat, par son chant, contre la platiné 4, de préférence dans une zone sensiblement plane de cette dernière.

Avantageusement, la présence d'un fond 14 formant butée axiale permet de positionner de manière précise et reproductible la barre transversale 2 en appui direct contre la platine 4, lors de l'emboîtement précédant le collage, ce qui facilite l'assemblage, et permet de gagner en temps et en précision.

En outre, la mise en appui de la barre transversale 2 (en l'espèce, par le chant du tube qui la constitue) contre la paroi de fond 14 procure une assise robuste et stable, très résistante aux efforts structurels de compression latérale (efforts axiaux), et par conséquent efficace contre le rapprochement des montants latéraux de carrosserie.

On peut ainsi rigidifier la carrosserie du véhicule, et améliorer la préservation de l'habitacle en cas de choc.

De préférence, le manchon de support 5 est percé d'au moins un orifice d'injection 12 qui s'ouvre sensiblement radialement, par rapport à l'axe directeur (YY'), à travers le fond de la chambre de collage 10, de sorte à faire communiquer ladite chambre de collage 10 avec l'extérieur.

Avantageusement, ledit orifice d'injection 12, distinct de l'ouverture principale (« embouchure ») du logement tubulaire 8 par laquelle la barre transversale 2 pénètre dans ledit logement 8, reste facilement accessible depuis l'extérieur de l'assemblage, et plus particulièrement depuis l'extérieur du manchon 2, ce qui permet un remplissage en colle 11 facile, rapide et propre, sans débordement ni coulure.

Ledit orifice 12 pourra être obtenu très simplement par un perçage ou une crevure effectué(e) sensiblement transversalement à l'axe directeur (YY'), de préférence au sommet du bossage délimitant le fond de la chambre de collage 10.

Bien entendu, la section de passage dudit orifice 12 sera suffisante pour permettre un remplissage de la chambre 10 par injection gravitaire ou, de préférence, sous pression supérieure à la pression atmosphérique. Ladite section de passage sera en revanche strictement inférieure à la superficie utile de l'ouverture de la chambre correspondant à la surface à encoller.

En d'autres termes, la chambre 10, sera, à l'exception du, ou des, orifice(s) d'injection 12, radialement borgne, de sorte à pouvoir efficacement canaliser et contenir la colle à l'intérieur de l'assemblage.

A titre indicatif, le diamètre de passage de l'orifice d'injection 12 pourra être de l'ordre de 6 mm.

Le cas échéant, on pourra prévoir plusieurs orifices d'injections 12 répartis sur la circonférence de la même chambre 10, par exemple pour faciliter l'évacuation de l'air lors du remplissage par la colle et/ou homogénéiser l'injection de colle.

Selon une variante de réalisation préférentielle qui peut constituer une invention à part entière, l'attache de colonne de direction 7 est fixée sur un manchon intermédiaire 13, distinct et axialement distant du manchon de support 5 (ou, le cas échéant, distinct et axialement distant de chacun des manchons de support appartenant respectivement au premier et au second support latéral 3, 3'), tel que cela est illustré sur la figure 1.

La barre transversale 2 est alors enfilée et fixée dans ledit manchon intermédiaire 13.

Ce manchon intermédiaire 13 pourra être formé en métal, et notamment en acier.

Les deux consoles en U des attaches 7 pourront avantageusement être soudées sur ledit manchon intermédiaire 13.

Le cas échéant, ledit manchon intermédiaire 13 pourra également recevoir, par vissage ou par soudage, une ou des potences 15 assurant la liaison de la traverse 1, et plus particulièrement de la portion intermédiaire 2C de la barre transversale 2, au tablier, à l'opposé de l'habitacle.

Ainsi, le manchon intermédiaire 13 pourra former un sous-ensemble de fixation, robuste et facile à engager sur la barre transversale 2, entre les deux extrémités 2A, 2B, indépendamment et à distance axiale des supports latéraux 3, 3'.

La traverse 1 profitera de la sorte d'une structure modulaire légère et simple à assembler.

Avantageusement, la traverse 1 conforme à l'invention présente une grande légèreté et un faible encombrement tout en conservant un bon comportement mécanique, tant vis-à-vis des vibrations que des efforts structurels provoqués par le roulage ou, éventuellement, par une collision du véhicule avec un obstacle.

En particulier, l'invention porte naturellement sur un procédé d'assemblage de traverse pour planche de bord de véhicule comprenant l'une et/ou l'autre des opérations de fabrication et d'assemblage décrites dans ce qui précède.

## Revendications

1. Traverse (1) pour planche de bord de véhicule, ladite traverse comprenant une barre transversale (2) qui s'étend en longueur selon un axe directeur (YY') depuis un premier support latéral (3) jusqu'à un second support latéral (3'), chacun destiné à la fixation de la traverse sur la carrosserie du véhicule, au moins le premier support latéral (3) comprenant une platine (4) conçue pour venir se fixer sur un montant de la carrosserie du véhicule, ladite traverse étant **caractérisée en ce qu'**un manchon de support (5) est fixé sur ladite platine (4), dont la paroi latérale (6) interne délimite, autour de l'axe directeur (YY'), un logement tubulaire (8) dans lequel la barre transversale (2) est emboîtée par une première extrémité (2A), ledit manchon de support (5) comportant une chambre de collage (10) qui est marquée en creux depuis la paroi latérale (6) interne dudit manchon de support, en décrochement transverse par rapport à l'axe directeur (YY'), et qui contient un joint de colle (11) qui assure la fixation dudit manchon de support (5) sur ladite barre transversale (2).

2. Traverse selon la revendication 1 **caractérisée en ce que** la chambre de collage (10), et son ouverture sur le logement tubulaire (8), couvre, autour de l'axe directeur (YY'), un secteur angulaire supérieur à 90 degrés, de préférence supérieur ou égal à 180 degrés, voire supérieur ou égal à 270 degrés.

3. Traverse selon la revendication 1 ou 2 **caractérisée en ce que** la paroi latérale (6) interne du logement tubulaire (8) forme un contour fermé sur lui-même autour de l'axe directeur (YY') et **en ce que** la chambre de collage (10) forme une gorge annulaire.

4. Traverse selon l'une des revendications précédentes **caractérisée en ce que** la platine (4) forme une paroi de fond (14) du logement tubulaire (8), sensiblement transverse à l'axe directeur (YY') et contre laquelle la barre transversale (2) vient en butée axiale.

5. Traverse selon l'une des revendications précédentes **caractérisée en ce que** le manchon de support (5) est percé d'au moins un orifice d'injection (12) qui s'ouvre sensiblement radialement, par rapport à l'axe directeur (YY'), à travers le fond de la chambre de collage (10), de sorte à faire communiquer ladite chambre de collage (10) avec l'extérieur.

6. Traverse selon l'une des revendications précédentes **caractérisée en ce que** la barre transversale (2) est formée par un tube dans un matériau composite à matrice polymère renforcée de fibres.

7. Traverse selon l'une des revendications précédentes **caractérisée en ce que** la platine (4) et le manchon de support (5) sont réalisés dans un ou des matériaux métalliques et assemblés l'un à l'autre par soudage.

8. Traverse selon l'une des revendications précédentes **caractérisée en ce que** la chambre de collage est obtenue par expansion plastique locale de la paroi latérale interne du logement tubulaire, de préférence par hydroformage ou par roulage.

9. Traverse selon l'une des revendications précédentes **caractérisée en ce que** l'attache de colonne de direction (7) est fixée sur un manchon intermédiaire (13), distinct et axialement distant du manchon de support (5), et dans lequel est enfilée et fixée la barre transversale (2).

10. Support latéral (3, 3') pour traverse de planche de bord d'un véhicule automobile, comprenant une platine (4) conçue pour venir se fixer sur un montant de la carrosserie du véhicule, **caractérisé en ce qu'**un manchon de support (5) est fixé sur ladite platine (4) dont la paroi latérale interne (6) délimite un logement tubulaire (8) destiné à accueillir l'extrémité d'une barre transversale (2) de la traverse, ledit manchon de support (5) comportant une chambre de collage (10) qui est marquée en creux depuis la paroi latérale interne (6) dudit manchon de support (5), en décrochement transverse par rapport à l'axe du logement tubulaire (8).

## Patentansprüche

1. Querträger (1) für ein Fahrzeugarmaturenbrett, wobei der Querträger einen Querbalken (2) umfasst, der sich in der Länge entlang einer Lenkachse (YY') von einem ersten Seitenträger (3) zu einem zweiten Seitenträger (3') erstreckt, die jeweils für die Befestigung des Querträgers an der Karosserie des Fahrzeugs bestimmt sind, wobei mindestens der erste Seitenträger (3) eine Platte (4) umfasst, die ausgeführt ist, um auf einem Steher der Karosserie des Fahrzeugs montiert zu werden, wobei der Querträger **dadurch gekennzeichnet ist, dass** eine Traghülse (5) auf der Platte (4) befestigt ist, deren innere Seitenwand (6) um die Lenkachse (YY') eine röhrenförmige Aufnahme (8) begrenzt, in die der Querbalken (2) mit einem ersten Ende (2A) eingesetzt ist, wobei die Traghülse (5) eine Klebekammer (10) umfasst, die von der inneren Seitenwand (6) der Traghülse mit einem transversalen Rücksprung in Bezug zur Lenkachse (YY') hohl markiert ist, und die eine Klebstofffuge (11) enthält, die die Befestigung der Traghülse (5) auf dem Querbalken (2) gewährleistet.

2. Querträger nach Anspruch 1, **dadurch gekennzeichnet, dass** die Klebekammer (10) und ihre Öffnung auf der röhrenförmigen Aufnahme (8) um die Lenkachse (YY') einen Winkelsektor größer als 90 Grad, vorzugsweise größer oder gleich 180 Grad bzw. größer oder gleich 270 Grad, bedeckt.

3. Querträger nach Anspruch 1 oder 2, **dadurch gekennzeichnet, dass** die innere Seitenwand (6) der röhrenförmigen Aufnahme (8) eine auf sich geschlossene Kontur der Lenkachse (YY') bildet, und dass die Klebekammer (10) eine ringförmige Nut bildet.

4. Querträger nach einem der vorhergehenden Ansprüche, **dadurch gekennzeichnet, dass** die Platte (4) eine Bodenwand (14) der röhrenförmigen Aufnahme (8) im Wesentlichen transversal zur Lenkachse (YY') bildet, an der der Querbalken (2) axial zum Anschlag gelangt.

5. Querträger nach einem der vorhergehenden Ansprüche, **dadurch gekennzeichnet, dass** die Traghülse (5) mit mindestens eine Einspritzöffnung (12) versehen ist, die sich im Wesentlichen radial in Bezug zur Lenkachse (YY') durch den Boden der Klebekammer (10) öffnet, um die Klebekammer (10) mit außen zu verbinden.

6. Querträger nach einem der vorhergehenden Ansprüche, **dadurch gekennzeichnet, dass** der Querbalken (2) von einem Rohr aus Verbundstoff mit faserverstärkter Polymermatrix gebildet ist.

7. Querträger nach einem der vorhergehenden Ansprüche, **dadurch gekennzeichnet, dass** die Platte (4) und die Traghülse (5) aus einem oder mehreren metallischen Materialien, die durch Schweißen miteinander verbunden sind, hergestellt ist.

8. Querträger nach einem der vorhergehenden Ansprüche, **dadurch gekennzeichnet, dass** die Klebekammer durch lokale plastische Expansion der inneren Seitenwand der röhrenförmigen Aufnahme, vorzugsweise durch Hydroformen und Walzen, erhalten wird.

9. Querträger nach einem der vorhergehenden Ansprüche, **dadurch gekennzeichnet, dass** die Lenksäulenbefestigung (7) an einer Zwischenhülse (13) befestigt ist, die sich von der Traghülse (5) unterscheidet und axial entfernt ist, und in die der Querbalken (2) eingeschoben und darin befestigt ist.

10. Seitenträger (3, 3') für einen Querträger eines Kraftfahrzeugarmaturenbretts, umfassend eine Platte (4), die ausgeführt ist, sich an einem Steher der Karosserie des Fahrzeugs zu befestigen, **dadurch gekennzeichnet, dass** eine Traghülse (5) auf der Platte (4) befestigt ist, deren innere Seitenwand (6) eine röhrenförmige Aufnahme (8) begrenzt, die dazu bestimmt ist, das Ende eines Querbalkens (2) des Querträgers aufzunehmen, wobei die Traghülse (5) eine Klebekammer (10) umfasst, die von der inneren Seitenwand (6) der Traghülse (5) mit einem transversalen Rücksprung in Bezug zur Achse der röhrenförmigen Aufnahme (8) hohl markiert ist.

## Claims

1. A cross-member (1) for the dashboard of a vehicle, said cross-member including a cross-bar (2) which extends lengthwise along a guiding axis (YY') from a first side support (3) to a second side support (3'), each intended for the securing of the cross-member on the body of the vehicle, at least the first side support (3) including a plate (4) designed to come to be secured on a pillar of the body of the vehicle, said cross-member being **characterized in that** a support sleeve (5) is secured to said plate (4), the internal side wall (6) of which delimits, about the guiding axis (YY'), a tubular housing (8) in which the cross-bar (2) is fitted by a first end (2A), said support sleeve (5) comprising a bonding chamber (10) which is debossed from the internal side wall (6) of said support sleeve, with transverse indentation with respect to the guiding axis (YY'), and which contains a bonded joint (11) which ensures the securing of said support sleeve (5) to said cross-bar (2).

2. The cross-member according to Claim 1, **characterized in that** the bonding chamber (10), and its opening on the tubular housing (8), covers, about the guiding axis (YY'), an angular sector greater than 90 degrees, preferably greater than or equal to 180 degrees, even greater than or equal to 270 degrees.

3. The cross-member according to Claim 1 or 2, **characterized in that** the internal side wall (6) of the tubular housing (8) forms a contour closed on itself about the guiding axis (YY') and **in that** the bonding chamber (10) forms an annular groove.

4. The cross-member according to one of the preceding claims, **characterized in that** the plate (4) forms a base wall (14) of the tubular housing (8), substantially transverse to the guiding axis (YY') and against which the cross-bar (2) comes into axial abutment.

5. The cross-member according to one of the preceding claims, **characterized in that** the support sleeve (5) is bored by at least one injection opening (12) which opens substantially radially, with respect to the guiding axis (YY'), through the base of the bonding chamber (10), so as to cause said bonding chamber (10) to communicate with the exterior.

6. The cross-member according to one of the preceding claims, **characterized in that** the cross-bar (2) is formed by a tube in a composite material with a polymer matrix reinforced with fibres.

7. The cross-member according to one of the preceding claims, **characterized in that** the plate (4) and the support sleeve (5) are made from one or more metallic materials and assembled one to the other by welding.

8. The cross-member according to one of the preceding claims, **characterized in that** the bonding chamber is obtained by local plastic expansion of the internal side wall of the tubular housing, preferably by hydroforming or by rolling.

9. The cross-member according to one of the preceding claims, **characterized in that** the steering column fastening (7) is secured on an intermediate sleeve (13), distinct and axially distant from the support sleeve (5), and in which the cross-bar (2) is inserted and secured.

10. A side support (3, 3') for a dashboard cross-member of a motor vehicle, including a plate (4) designed to come to be secured to a pillar of the body of the vehicle, **characterized in that** a support sleeve (5) is secured to said plate (4), the internal side wall (6) of which delimits a tubular housing (8) intended to receive the end of a cross-bar (2) of the cross-member, said support sleeve (5) comprising a bonding chamber (10) which is debossed from the internal side wall (6) of said support sleeve (5), with transverse indentation with respect to the axis of the tubular housing (8).
